# EUROPEAN PATENT APPLICATION

(11) **EP 4 036 177 A1**
(43) Date of publication of application: **03.08.2022**
(21) Application number: 20867485.3
(22) Date of filing: 23.09.2020
(51) Int. Cl.: C09D 5/20, C09D 183/04, C09D 183/08, C09D 7/61

(54) **COMPOSITION FOR FORMING REMOVABLE COATING FILM, AND REMOVABLE COATING FILM**

(30) Priority: 27.09.2019 JP 2019177848
(71) Applicant: NITTO DENKO CORPORATION, Ibaraki-shi Osaka 567-8680 (JP)
(72) Inventor: OMURA, Shunsuke, Ibaraki-shi, Osaka 567-8680 (JP); MISHIMA, Takehiko, Ibaraki-shi, Osaka 567-8680 (JP); NAITO, Tomonari, Ibaraki-shi, Osaka 567-8680 (JP); FUJIOKA, Kazuya, Ibaraki-shi, Osaka 567-8680 (JP)
(74) Representative: Hoffmann Eitle
(86) International application number: PCT/JP2020/035849
(87) International publication number: WO 2021/060293

(57) **Abstract**

The present invention relates to a composition for peelable-coating-film formation including an elastomer and an amino-modified silicone oil, wherein a film formed from the composition for peelable-coating-film formation has a breaking strength of F_{B} (N/20 mm) in a tensile test and a coating film formed from the composition for peelable-coating-film formation on a surface of an SUS304 plate has a peel adhesive force of F_{G} (N/20 mm) in peeling from the SUS304 plate, F_{B}/F_{G} being 1.5 or larger.

## Description

### TECHNICAL FIELD

The present invention relates to a composition for peelable-coating-film formation and a peelable coating film.

### BACKGROUND ART

A method for preventing a structure from suffering the adhesion of soils thereto, abrasion or scratches, etc. has conventionally been used in which surfaces of the structure and structural member are protected with an antifouling coating film. This antifouling coating film is kept adherent to and protecting the structure, etc. until a given time and is required to be easily peeled according to need (peelability). For example, Patent Documents 1 to 5 each disclose a protective film or a composition into which a silicone or the like has been incorporated for the purpose of improving the peelability.

Meanwhile, there are cases where when a structural member or the like (adherend) which has been coated with an antifouling coating film is handled, for example, in a factory, a material such as, for example, a coating material, an adhesive, or a solvent (hereinafter such a material is referred to also as "adhesive or the like") accidentally adheres to the surface of the antifouling coating film before the time of replacing the antifouling coating film by a fresh one or peeling the antifouling coating film. This necessitates a cleaning operation for removing the adhesive or the like which has adhered to the surface of the coating film. There are also cases where the coating film swells due to a solvent contained in the adherent adhesive or the like and this considerably reduces the adhesion between the adherend and the coating film.

Patent Document 6, for example, discloses a coating composition excellent in terms of solvent resistance, recoatability, and suitability for removing scribblings or unsusceptibility to scribbling, as a coating composition giving coating films having excellent solvent resistance. The coating composition described in Patent Document 6 includes, as essential components, a liquid organosiloxane compound, an organometal-based catalyst, an alkoxy-group-containing organosilane compound having a primary amino group or a secondary amino group, at least one compound selected from among amino-modified silicone oils and amino-group-containing organosiloxane compounds, and at least one compound selected from among compounds each having two or more glycidyl groups in the molecule, glycidyl-group-containing silane compounds, and glycidyl-group-containing silicone oligomers.

### CITATION LIST

### PATENT LITERATURE

Patent Document 1: JP-A-Hei-10-249981
Patent Document 2: JP-A-Hei-11-172160
Patent Document 3: JP-T-2018-524446 (The term "JP-T" as used herein means a published Japanese translation of a PCT patent application.)
Patent Document 4: JP-A-2018-59084
Patent Document 5: JP-A-Sho-60-137975
Patent Document 6: Japanese Patent No. 4721667

### SUMMARY OF INVENTION

### TECHNICAL PROBLEMS

However, the conventional antifouling coating films (protective films) described in Patent Documents 1 to 5 have a problem in that if an adhesive or the like adheres to the film surface, the adhesive or the like shows so high force of adhesion to the coating film that it is difficult to easily remove the adhesive or the like, resulting in a considerable decrease in operation efficiency.

Meanwhile, the coating composition described in Patent Document 6 gives coating films which have satisfactory surface cleanability but have so high adhesion to the adherends that the coating films cannot be easily peeled according need.

As shown above, no coating film or composition for coating film formation which simultaneously satisfies peelability and cleanability has been developed hitherto.

An object of the present invention, which has been achieved in view of the circumstances described above, is to provide a composition for peelable-coating-film formation that can give coating films which not only have improved peelability from the adherends and improved surface cleanability but also have excellent resistance to solvents including hexane, and to provide a peelable coating film formed from the composition.

### SOLUTION TO THE PROBLEMS

The present inventors diligently made investigations in order to overcome those problems and, as a result, have discovered that using an elastomer such as a silicone elastomer or a urethane elastomer as a main component of a composition for coating film formation is effective in obtaining coating films excellent in terms of peelability and cleanability and that such coating films are obtained as tough coating films even at room temperature. However, it is possible that the coating films themselves, although including an elastomer as a main component, may swell upon adhesion of an adhesive or the like to the surfaces thereof, depending on the kind of the adhesive or the like, or may have reduced cleanability. The present inventors then discovered that by incorporating an amino-modified silicone oil into that composition, resistance to solvents contained in adhesives or the like can be obtained and the cleanability can be maintained.

Furthermore, the present inventors have discovered that adding a filler to that composition is effective in further improving the peelability, using a ratio of breaking strength to peel adhesive force of a coating film as an index to the peelability.
The present invention has been achieved based on these findings.

The object of the present invention can be accomplished by the following [1] to [4].
[1] A composition for peelable-coating-film formation including an elastomer and an amino-modified silicone oil, wherein
   a film formed from the composition for peelable-coating-film formation has a breaking strength of F_{B} (N/20 mm) in a tensile test and a coating film formed from the composition for peelable-coating-film formation on a surface of an SUS304 plate has a peel adhesive force of F_{G} (N/20 mm) in peeling from the SUS304 plate, F_{B}/F_{G} being 1.5 or larger.
[2] The composition for peelable-coating-film formation according to [1] which further contains a filler.
[3] The composition for peelable-coating-film formation according to [1] or [2] wherein the elastomer is a silicone elastomer or a urethane elastomer.
[4] A peelable coating film formed from the composition for peelable-coating-film formation according to any one of [1] to [3].

### ADVANTAGEOUS EFFECTS OF INVENTION

The composition of the present invention includes an elastomer and an amino-modified silicone oil, and in the present invention, a ratio between a breaking strength of a film formed from the composition and a peel adhesive strength of a coating film formed on an adherend from the composition has been appropriately limited. Because of this, it is possible to provide a composition for peelable-coating-film formation that can give coating films which not only have improved peelability from the adherends and improved surface cleanability but also have excellent resistance to solvents including hexane, and to provide a peelable coating film formed from the composition.

### BRIEF DESCRIPTION OF DRAWINGS

[Fig. 1] Fig. 1 is a cross-sectional view illustrating a structural member having a peelable coating film according to this embodiment formed thereon.
[Fig. 2] Fig. 2 is a cross-sectional view showing a peelable coating film having an adhesive or the like which has adhered to the surface thereof.

### DESCRIPTION OF EMBODIMENTS

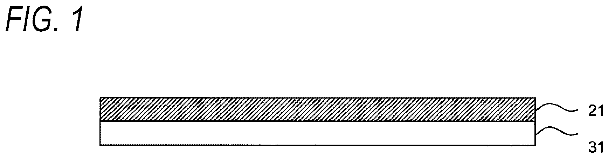

Modes for carrying out the present invention are explained in detail below. Fig. 1 is a cross-sectional view illustrating a structural member having a peelable coating film according to an embodiment formed thereon. As shown in Fig. 1, a composition for peelable-coating-film formation according to an embodiment of the present invention is applied to a surface of a structural member (adherend) 31 and then dried, thereby forming a peelable coating film 21. This peelable coating film 21 is peeled from the structural member 31 with a desired timing. In this description, the easiness with which the peelable coating film 21 can be peeled from the structural member 31 is referred to as "peelability". Furthermore, the term "peelable coating film" in this description means a coating film which can be peeled off in a sheet form without breaking.

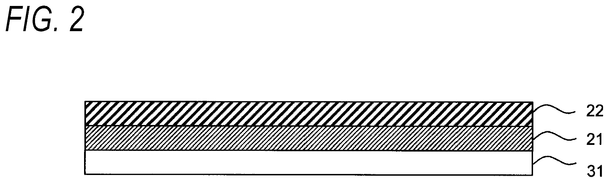

Fig. 2 is a cross-sectional view showing a peelable coating film having an adhesive or the like which has adhered to the surface thereof. There are cases where when the structural member 31 is handled, for example, in a factory, an adhesive or the like 22 adheres to the surface of the peelable coating film 21. The adhesive or the like 22 needs to be removed before the time of peeling the peelable coating film 21 from the structural member 31. In this description, the easiness with which the adhesive or the like 22 can be removed from the surface of the peelable coating film 21 is referred to as "cleanability". Although in Fig. 2, the adhesive or the like 22 is adherent to the whole surface of the peelable coating film 21, there are cases where the adhesive or the like 22 adheres to only some of the surface of the peelable coating film 21.

The composition for peelable-coating-film formation according to this embodiment is explained in detail below.

### [Composition for Peelable-Coating-Film Formation]

The composition for peelable-coating-film formation according to this embodiment is a composition for peelable-coating-film formation including an elastomer and an amino-modified silicone oil. In cases when a film is formed from the composition for peelable-coating-film formation and a coating film is formed from the composition on a surface of an SUS304 plate and when a tensile breaking strength (hereinafter referred to also as "breaking strength") of the film measured by a tensile test is expressed by F_{B} (N/20 mm) and a peel force of adhesion between the coating film and the SUS304 plate is expressed by F_{G} (N/20 mm), then F_{B}/F_{G} is 1.5 or larger.

The components contained in the composition for peelable-coating-film formation are explained in further detail.

### (Elastomer)

The composition for peelable-coating-film formation according to this embodiment includes an elastomer. As stated above, since the composition for coating film formation includes an elastomer as a main component, coating films formed from the composition can have improved peelability and cleanability.

The elastomer is not particularly limited, and any desired appropriate elastomer can be used. Examples of the elastomer include silicone elastomers, urethane elastomers, acrylic elastomers, rubbery polymers, polyamide elastomers, polyethylene elastomers, styrene elastomers, and butadiene elastomers. One elastomer alone may be used, or elastomers may be used in combination.

Preferred of these are silicone elastomers or urethane elastomers, from the standpoint of improving the peelability and cleanability of coating films.

Examples of the silicone elastomers usable in this embodiment include addition type silicone elastomers, condensation type silicone elastomers, and UV-curing silicone elastomers, and include ones which, after having been applied, form crosslinked films upon heating, drying, UV irradiation, etc.

Such silicone elastomers each may be a one-pack type silicone elastomer, which is dried alone, or a two-pack type silicone elastomer into which a curing agent is incorporated. Furthermore, the silicone elastomers may be of an emulsion type.

Examples thereof include KE-1950-10(A/B), KE-1950-20(A/B), KE-1950-30(A/B), KE-1950-35(A/B), KE-1950-40(A/B), KE-1950-50(A/B), KE-1950-60(A/B), KE-1950-70(A/B), KE-1987(A/B), and KE-1988(A/B), manufactured by Shin-Etsu Chemical Co., Ltd., LR7665 Series and LR3033 Series, manufactured by Wacker Asahikasei Silicone Co., Ltd., TSE3032 Series and LSR Series, manufactured by Momentive Inc., and SM8706EX, SM7036EX, SM7060EX, SM7025EX, SM490EX, SM8701EX, SM8709SR, SM8716SR, IE-7045, IE-7046T, SH7024, BY22-744EX, BY22-818EX, FZ-4658, FZ-4634EX, and FZ-4602, manufactured by Dow Corning Toray Co., Ltd.

Examples of the emulsion type include POLON-MF-56, KM-9771, KM-9774, KM-2002-T, KM-2002-L-1, and KM-9772, manufactured by Shin-Etsu Chemical Co., Ltd.

Examples of the urethane elastomers usable in this embodiment include a polyurethane elastomer having an extended chain, obtained by reacting an isocyanate group and a polyol. Examples of this polyurethane elastomer include one having carboxyl groups obtained using polyols including a carboxyl-group-containing polyol and one having a hydroxyl group at an end. The polyurethane elastomer having carboxyl groups is preferably one which is neutralized with a basic substance. Examples of commercial products thereof include trade names "Super Flex Series 110", "Super Flex Series 150", "Super Flex Series 460S", and "Super Flex Series 470", manufactured by Dai-ichi Kogyo Seiyaku Co., Ltd., "Neorez R9649" and "Neorez R966", manufactured by Avecia Inc., "HYDRAN WLS-210" and HYDRAN WLS-250", manufactured by DIC Corp., and "PERMARIN UA-310", manufactured by Sanyo Chemical Industries, Ltd.

Use of a urethane elastomer is preferred because F_{B}/F_{G}, which is the ratio of the breaking strength F_{B} of a film to peel adhesive force F_{G} that will be described later, can be regulated to 1.5 or larger without necessitating addition of a filler.

The acrylic elastomers may be commercial products. Examples of the commercial products include trade name "High-Heat-Resistance Grade XB Series", manufactured by Aron Kasei Co., Ltd., and trade names "Polysol AP-4780N", "Polysol AP-609", "Polysol AP-691", and "Polysol AP-4795", manufactured by Showa Denko K.K.

Examples of the styrene elastomers include elastomers including polystyrene as a hard segment and polybutadiene, polyisoprene, and a polybutadiene/polyisoprene copolymer as soft segments, and further include products of hydrogenation of these.

The content of the elastomer in the composition is preferably 20-98 mass%, more preferably 30-95 mass%, based on the mass of the whole composition. In cases when the content of the elastomer is within such a range, coating films having better peelability and cleanability can be obtained.

### (Amino-modified Silicone Oil)

The composition for peelable-coating-film formation according to this embodiment includes an amino-modified silicone oil in addition to the elastomer. Coating films formed from the composition including an amino-modified silicone oil together with the elastomer have excellent resistance (solvent resistance) to solvents, e.g., hexane, contained in adhesives or the like. These coating films can be prevented from swelling upon exposure to solvents. This is thought to be because due to the high polarity of amines, the amino-modified silicone oil, among various modified silicone oils, brings about enhanced resistance to solvents including hexane.

The amino-modified silicone oil is a silicone oil having a structure in which some of the methyl groups of a silicone oil have been replaced by one or more aminoalkyl groups. The modified portion(s) may be any of side chains, one end, both ends, and a combination of side chains and both ends. The amino-modified silicone oil may be of an emulsion type.

As the amino-modified silicone oil, an amino-modified silicone oil generally available commercially can be used as such. It is especially preferred to use an amino-modified silicone oil represented by the following general formula (1). By using this amino-modified silicone oil represented by general formula (1), high reliability can be obtained.

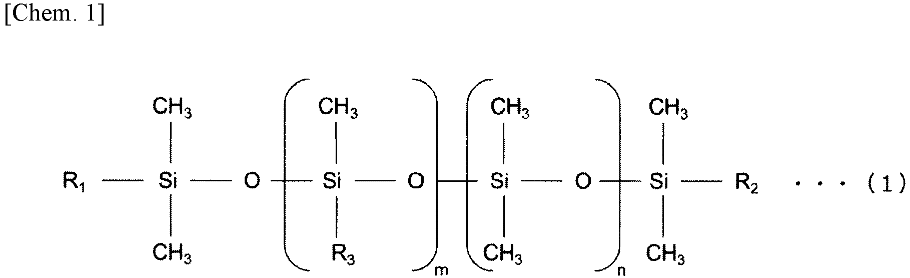

In formula (1), R₁, R₂, and R₃ are each an amino-modified alkyl group or an amino group, and examples thereof include -C₃H₆-NH₂, -C₆H₄-NH₂, -C₃H₆-NH-C₂H₄-NH₂, -C₃H₆-NH-CH₃, and -NH₂. R₁, R₂, and R₃ may be the same or different. R₁, R₂, and R₃ may contain any one or more members selected from among alkyl groups, an epoxy group, a carboxyl group, a methacryl group, a carbinol group, a hydroxyl group, a mercapto group, polyether groups, a phenyl group, fluoroalkyl groups, aralkyl groups, and a hydrogen atom.

In formula (1), the number of repetitions m is a positive number of 0-50, and the number of repetitions n is a positive number of 0-50. Especially preferably, m is in the range of 0-20 and n is in the range of 0-20.

Especially preferably used as the amino-modified silicone oil represented by formula (1) are both-end aminopropyl-modified dimethylpolysiloxanes represented by formula (1) in which m is usually 0-40 and n is usually 0-40. Preferred of these are both-end aminopropyl-modified dimethylpolysiloxanes in which m is 0-20 and n is 0-20.

Amino-modified silicone oils including the amino-modified silicone oil represented by general formula (1) can be obtained by conventionally known production methods.

Examples of the amino-modified silicone oil include KF-868, KF-865, KF-864, KF-859, KF-393, KF-860, KF-877, KF-880, KF-8004, KF-8002, KF-8005, KF-867, X-22-3820W, KF-869, KF-861, X-22-3939A, PAM-E, KF-8010, X-22-161A, X-22-161B, KF-8012, KF-8008, X-22-1660B-3, KF-857, KF-8001, KF-862, X-22-9192, and KF-858, manufactured by Shin-Etsu Chemical Co., Ltd., BY16-205, FZ-3760, SF8417, BY16-849, BY16-892, FZ-3785, BY16-872, BY16-213, BY16-203, BY16-898, BY16-890, BY16-891, BY16-893, BY16-871, and BY16-853U, manufactured by Dow Corning Toray Co., Ltd., FM-3311, FM-3321, and MF-3325, manufactured by Chisso Corp., TSF4702, TSF4703, TSF4704, TSF4705, TSF4706, TSF4707, TSF4708, TSF4709, XF42-B1989, XF42-B8922, XF42-C0330, XF49-C1109, SILSOFT A-553, SILSOFT A-843, SILSOFT A-858, and XF-42-A3335, manufactured by Momentive Performance Materials Inc., and WACKER L652, WACKER L653, WACKER L655, WACKER L656, WACKER FINISH WR1100, WACKER FINISH WR1200, WACKER FINISH WR1300, WACKER FINISH WR1600, WACKER FINISH WT1250, and WACKER FINISH WT1650, manufactured by Wacker Asahikasei Silicone Co., Ltd.

Examples of the emulsion type include PolonMF-14, PolonMF-14D, PolonMF-14EC, PolonMF-29, PolonMF-39, PolonMF-44, PolonMF-52, KM-907, X-52-2265, PolonMF-51, and KM9771, manufactured by Shin-Etsu Chemical Co., Ltd., FZ-4632, FZ-4635, FZ-4640, FZ-4645, FZ-4658, FZ-4671, and FZ-4678, manufactured by Nippon Unicar Co., Ltd., and SM8704C/SM8904, manufactured by Dow Corning Toray Co., Ltd.

The content of the amino-modified silicone oil in the composition is preferably 2-100 parts by weight, more preferably 5-80 parts by weight, per 100 parts by weight of the elastomer. In cases when the content thereof is within such a range, the solvent resistance can be further improved. One amino-modified silicone oil may be used, or two or more amino-modified silicone oils may be used in combination.

### <(Breaking strength of film, F_{B})/(peel adhesive force of coating film, F_{G}): 1.5 or larger>

The ratio between a breaking strength of a film formed from the composition for peelable-coating-film formation according to this embodiment, the breaking strength being measured by a tensile test, to a peel adhesive force of a coating film formed from the composition on an SUS304 plate, the peel adhesive force being the peel force of adhesion between the coating film and the SUS304 plate, can be used as an index to the peelability of the coating film. Hence, by suitably regulating the ratio between the breaking strength and the peel adhesive force, a composition for forming coating films having excellent peelability can be obtained. Reasons for limiting the ratio between the breaking strength and the peel adhesive force are explained in more detail below.

The breaking strength measured by a tensile test is a strength indicating how the film formed from the composition for peelable-coating-film formation according to this embodiment is unsusceptible to rupture when both ends of the film are pulled away from each other. In case where the breaking strength is too low, the coating film, when peeled from the adherend, breaks to make the peeling difficult. Meanwhile, in case where the force of adhesion between the coating film and the adherend is too high, higher force is necessary for peeling the coating film from the adherend, making the coating film prone to break. Consequently, for enabling the coating film to be easily peeled without breaking, the ratio of the breaking strength F_{B} to the peel adhesive force F_{G} needs to be a given value or larger.

In the present invention, a breaking strength is calculated by producing a specimen for tensile test from a composition for peelable-coating-film formation as a sample and subjecting the specimen to a tensile test to measure a stress at breakage. In determining the breaking strength, the composition for peelable-coating-film formation as a sample is applied to a surface of a PET substrate having a thickness of 75 µm ("Lumirror S10 #75", manufactured by Toray Industries, Inc.) in a wet thickness of 500 µm using an applicator (YBA Baker/Applicator, manufactured by Yoshimitsu Seiki Co., Ltd.), dried at 35°C for 3 days, and then cut into a rectangular shape having a width of 10 mm and a length of 100 mm to obtain a specimen. At room temperature, both ends of the specimen are pulled away with a tensile tester to measure a stress at breakage of the specimen. The measured stress is converted to a value corresponding to a specimen width of 20 mm, and this value is taken as the breaking strength F_{B} (N/20 mm). This test is conducted under the conditions of a pulling speed of 300 mm/min and a chuck-to-chuck distance of 20 mm.

There is no particular upper limit on the breaking strength. From the standpoint of preventing the coating film from breaking when peeled from the adherend, the breaking strength is preferably 0.3 (N/20 mm) or higher, more preferably 0.8 (N/20 mm) or higher.

Meanwhile, in measuring the peel adhesive force F_{G}, the composition for peelable-coating-film formation as a sample is applied to a surface of an SUS304 plate, the surface having undergone a 2B treatment, in a wet thickness of 500 µm using an applicator (YBA Baker/Applicator, manufactured by Yoshimitsu Seiki Co., Ltd.). The applied composition is dried at 35°C for 3 days, and the resultant coating film is cut on the SUS304 plate into a width of 20 mm to obtain a specimen. Using a tensile tester, the specimen is peeled from the SUS304 plate, during which the required stress is measured. The measured value is taken as the peel adhesive force F_{G}. The measurement of peel adhesive force is conducted at room temperature under the conditions of a peel angle of 180° and a peeling speed of 300 mm/min.

The peel adhesive force is one which not only enables the force of adhesion between the adherend and the coating film to be maintained until a desired time but also renders the coating film easy to peel from the adherend, and such peel adhesive force is, for example, preferably 0.2-15 (N/20 mm), more preferably 0.5-12 (N/20 mm), still more preferably 1.0-10 (N/20 mm).

In case where the ratio of the breaking strength F_{B} (N/20 mm) to the peel adhesive force F_{G} (N/20 mm), F_{B}/F_{G}, is less than 1.5, the coating film is prone to break when peeled from the adherend with a desired timing. Consequently, in the present invention, F_{B}/F_{G} is 1.5 or larger, preferably 1.8 or larger, more preferably 2.0 or larger. By thus regulating the ratio, coating films which can be easily peeled from the adherends to attain satisfactory operation efficiency can be obtained. F_{B}/F_{G} can be set at a value within a desired range by suitably designing a makeup of the composition for peelable-coating-film formation to regulate the breaking strength F_{B} and the peel adhesive force F_{G}.

### (Filler)

The composition for peelable-coating-film formation of this embodiment preferably contains a filler. A filler is an ingredient capable of improving the hardness of the coating films, and the addition of a filler is effective in regulating the F_{B}/F_{G} to improve the peelability of the coating films.

In the case of adding a filler to the composition for peelable-coating-film formation according to this embodiment, the content of the filler in the composition is desirably 0-150 parts by weight, preferably 0-100 parts by weight, per 100 parts by weight of the elastomer. In cases when the content of the filler is within such a range, the peelability of the coating films can be still further improved. The content of the filler may be 2 parts by weight or more, or may be 5 parts by weight of more, per 100 parts by weight of the elastomer.

Examples of the filler include silica particles, titanium oxide particles, alumina particles, calcium carbonate, magnesium hydroxide, mica, kaolin, talc, carbon black, phyllosilicates, clay minerals, and diatomaceous earth. The size of the particles is preferably 5-5,000 nm in terms of average particle diameter. By regulating the size of the particles to a value within that range, the adhesion between the coating film and the adherend can be still further improved. The filler to be used can be either a powder type or an aqueous dispersion type.

As the filler, a commercial product can be used. Examples of the silica particles include Snowtex (registered trademark) Series (e.g., Snowtex (registered trademark) XL, Snowtex (registered trademark) YL, Snowtex (registered trademark) ZL, Snowtex (registered trademark) PST-2, Snowtex (registered trademark) 20, Snowtex (registered trademark) 30, Snowtex (registered trademark) 30L, Snowtex (registered trademark) C, Snowtex (registered trademark) O, and Snowtex (registered trademark) 50, all aqueous dispersion type, manufactured by Nissan Chemical Industries, Ltd.), Adelite Series (e.g., Adelite (registered trademark) AT-40 and Adelite (registered trademark) AT-50, both aqueous dispersion type, manufactured by ADEKA Corp.), AEROSIL (registered trademark) Series (e.g., AEROSIL (registered trademark) RX Series (RX50, RX200, RX300, etc.), AEROSIL (registered trademark) RX Series (RY50, RY200, RY200S, etc.), AEROSIL (registered trademark) NY 50 Series, AEROSIL (registered trademark) NAX Series, and AEROSIL (registered trademark) R Series, powder type, manufactured by Nippon Aerosil Co., Ltd.).

The composition for peelable-coating-film formation may contain any other appropriate oils unless the inclusion thereof lessens the effects of the present invention. Examples of such other oils include various silicone oils such as a dimethyl silicone oil, a polyether-modified silicone oil, a phenyl-modified silicone oil, a carbinol-modified silicone oil, a mercapto-modified silicone oil, a carboxyl-modified silicone oil, and a long-chain-alkyl-modified silicone oil, liquid paraffins, surfactants, liquid hydrocarbons, fluorinated oils, waxes, petrolactam, animal fats or oils, and fatty acids. Only one of these may be used, or two or more thereof may be used.

There are cases where the composition for peelable-coating-film formation containing any of such other oils can give peelable coating films having still further improved cleanability.

The composition for peelable-coating-film formation may contain any other appropriate additives unless the inclusion thereof lessens the effects of the present invention. Examples of the other additives include ultraviolet absorbers, light stabilizers, antioxidants, aging inhibitors, antistatic agents, pigments, colorants, leveling agents, and thickeners.

A coating film can be formed from the composition for peelable-coating-film formation of this embodiment by applying the composition to an adherend and drying the applied composition. Even through drying at room temperature (25°C), a highly even coating film can be obtained.

A known application method, such as spraying, application with a brush, roller coating, curtain flow coating, roll coating, dipping, or coater coating, can be used to directly apply the composition to any adherend.

Specific examples of the adherend include various structures including metallic products, woodwork products, plastic products, glass products, medical members (e.g., catheters, stents, gloves, pincettes, vessels, guides, and trays), members related to coating (e.g., robot arms, coating booths, hangers, covering materials, and ovens), buildings (internal and external wall surfaces, floor surfaces, and ceiling surfaces), electronic appliances, transportation vehicles (e.g., vehicles such as motor vehicles, two wheelers, and railroad cars and ships), and constituent members for these.

### <Peelable Coating Film>

A peelable coating film according to this embodiment is a coating film formed from the composition for peelable-coating-film formation described above, and this coating film not only can have improved peelability from the adherend and improved surface cleanability but also has excellent solvent resistance.

The coating film can have any desired appropriate thickness depending on intended applications, use environments, etc. The thickness of the coating film is preferably 50-1,000 µm, more preferably 80-500 µm. In cases when the thickness of the coating film is 50 µm or larger, the effect of protecting the adherend can be sufficiently obtained. Meanwhile, in cases when the thickness of the coating film is 1,000 µm or less, the efficiency of forming the coating film is excellent.

The thickness of the coating film can be measured, for example, with RI-205, manufactured by PEAKOCK Co., Ltd.

### EXAMPLES

The present invention is explained below in more detail by reference to Examples, but the present invention is not limited to the following Examples in any way.

### [Production of Compositions for Peelable-Coating-Film Formation]

Compositions for peelable-coating-film formation were produced by mixing 100 parts by mass of a silicone elastomer (silicone emulsion elastomer KM2002T, manufactured by Shin-Etsu Chemical Co., Ltd.) or a urethane elastomer (urethane emulsion elastomer Super Flex 470, manufactured by Dai-ichi Kogyo Seiyaku Co., Ltd.) with the silicone oils and fillers of various kinds shown in Table 1, which will be given later, the amounts thereof being shown in Table 1.

### [Evaluation of Peelability]

### [Measurement of Breaking Strength F_{B}]

Specimens for tensile test were produced from the obtained compositions for peelable-coating-film formation, and each specimen was examined for stress at breakage by performing a tensile test, thereby determining the breaking strength F_{B}.

In the breaking strength measurement, each composition for peelable-coating-film formation as a sample was first applied to a surface of a PET substrate having a thickness of 75 µm ("Lumirror S10 #75", manufactured by Toray Industries, Inc.) in a wet thickness of 500 µm using an applicator (YBA Baker/Applicator, manufactured by Yoshimitsu Seiki Co., Ltd.), dried at 35°C for 3 days, and then cut into a rectangular shape having a width of 10 mm and a length of 100 mm to obtain a specimen.

Both longitudinal-direction ends of the produced specimen were pulled away using a tensile tester (AUTOGRAPH AGS-J/H 1kN, manufactured by Shimadzu Corp.) to measure a stress at breakage (MPa). In the Examples, the measurement of stress at breakage was made at room temperature under the conditions of a chuck-to-chuck distance of 20 mm and a pulling speed of 300 mm/min. The measured stress was converted to a value corresponding to a specimen width of 20 mm, and this value was taken as the breaking strength F_{B} (N/20 mm).

The length λ of the elongation of the specimen of just before the breakage thereof was measured and divided by the initial length of the specimen (chuck-to-chuck distance) L₀, thereby calculating a strain at breakage (%).

### [Measurement of Peel Adhesive Force F_{G}]

Specimens for peel adhesive force measurement were produced from the obtained compositions for peelable-coating-film formation and examined for peel adhesive force.

Each specimen was produced by applying the composition for peelable-coating-film formation to a surface of an SUS304 plate, the surface having undergone a 2B treatment, in a wet thickness of 500 µm using an applicator (YBA Baker/Applicator, manufactured by Yoshimitsu Seiki Co., Ltd.), drying the applied composition at 35°C for 3 days, and then cutting the resultant coating film on the SUS304 plate into a width of 20 mm. Using a tensile tester (AUTOGRAPH AGS-J/H 1kN, manufactured by Shimadzu Corp.), the specimen was peeled from the SUS304 plate, during which the required stress was measured. The measured value was taken as the peel adhesive force F_{G} (N/20 mm). The measurement of peel adhesive force was conducted at room temperature under the conditions of a peel angle of 180° and a peeling speed of 300 mm/min.

Furthermore, the ratio of the breaking strength F_{B} to the peel adhesive force F_{G} was calculated to thereby evaluate the peelability.

### [Evaluation of Cleanability]

### [Measurement of Adhesive Peel Force]

Specimens for adhesive peel force measurement were produced from the obtained compositions for peelable-coating-film formation and examined for adhesive peel force by performing an adhesive peel adhesion strength test.

Each specimen was produced in the following manner. First, the composition for peelable-coating-film formation was applied to a surface of an SUS304 plate having a thickness of 2 mm, the surface having undergone a 2B treatment, in a wet thickness of 500 µm using an applicator (YBA Baker/Applicator, manufactured by Yoshimitsu Seiki Co., Ltd.), and the applied composition was dried at 35°C for 3 days. Next, an adhesive (GP100, manufactured by Konishi Co., Ltd.) was applied to the surface of the dried coating film over a width of 30 mm and dried at 35°C for 24 hours. Thereafter, a double-sided pressure-sensitive adhesive tape (No. 5000NS, manufactured by Nitto Denko Corp.) was applied to the surface of the adhesive, and a PET (poly(ethylene terephthalate)) sheet ("Lumirror (registered trademark) S10 #75", manufactured by Toray Industries, Inc.) was applied thereto so as to be bonded to the adhesive by the double-sided tape interposed therebetween. Thus, each specimen was produced.

The SUS304 plate and the PET sheet were pulled away using a tensile tester (AUTOGRAPH AGS-J/H 1kN, manufactured by Shimadzu Corp.) in accordance with JIS K 6854-2 to conduct an adhesive peel adhesion strength test, thereby measuring an adhesive peel force. The measurement of adhesive peel force was conducted at room temperature under the conditions of a peel angle of 180° and a peeling speed of 100 mm/min.

### [Measurement of Adhesive Peel Force after Immersion in Hexane]

Specimens for adhesive peel force measurement after immersion in hexane were produced from the obtained compositions for peelable-coating-film formation and examined for adhesive peel force after immersion in hexane by performing an adhesive peel adhesion strength test.

Each specimen was produced in the following manner. First, the composition for peelable-coating-film formation was applied to a surface of an SUS304 plate having a thickness of 2 mm, the surface having undergone a 2B treatment, in a wet thickness of 500 µm using an applicator (YBA Baker/Applicator, manufactured by Yoshimitsu Seiki Co., Ltd.), and the applied composition was dried at 35°C for 3 days. Next, the SUS304 plate having the coating film formed on the surface was immersed in hexane for 1 hour and then dried at 60°C for 24 hours. Subsequently, an adhesive (GP100, manufactured by Konishi Co., Ltd.) was applied to the surface of the dried coating film over a width of 30 mm and dried at 35°C for 24 hours. Thereafter, a double-sided pressure-sensitive adhesive tape (No. 5000NS, manufactured by Nitto Denko Corp.) was applied to the surface of the adhesive, and a PET (poly(ethylene terephthalate)) sheet ("Lumirror (registered trademark) S10 #75", manufactured by Toray Industries, Inc.) was applied thereto so as to be bonded to the adhesive by the double-sided tape interposed therebetween. Thus, each specimen was produced.

The SUS304 plate and the PET sheet were pulled away using a tensile tester (AUTOGRAPH AGS-J/H 1kN, manufactured by Shimadzu Corp.) in accordance with JIS K 6854-2 to conduct an adhesive peel adhesion strength test, thereby measuring an adhesive peel force after immersion in hexane. The measurement of adhesive peel force was conducted at room temperature under the conditions of a peel angle of 180° and a peeling speed of 100 mm/min. Furthermore, in cases when the pulling of the SUS304 plate and the PET sheet with the tensile tester had resulted in peeling of the coating film from the SUS304 plate, the coating film and the SUS304 plate were bonded to each other with a double-sided pressure-sensitive adhesive tape (No. 5000NS, manufactured by Nitto Denko Corp.) and then subjected to the adhesive peel adhesion strength test.

### [Evaluation of Solvent Resistance]

### [Examination of State of Coating Film after Immersion in Hexane]

Specimens for solvent resistance examination were produced from the obtained compositions for peelable-coating-film formation and immersed in hexane. The state of the coating film was then examined to evaluate the solvent resistance.

Each specimen was produced by applying the composition for peelable-coating-film formation to a surface of an SUS304 plate having a thickness of 2 mm, the surface having undergone a 2B treatment, in a wet thickness of 500 µm using an applicator (YBA Baker/Applicator, manufactured by Yoshimitsu Seiki Co., Ltd.) and drying the applied composition at 35°C for 3 days. The obtained specimen was immersed in hexane for 10 minutes and then examined for the swelling of the coating film or for the lifting of the coating film from the SUS304 plate.

The results of the evaluation of peelability, cleanability, and solvent resistance are shown in the following Table 2. The solvent resistance was evaluated on the basis of the following criteria: a specimen in which neither the swelling of the coating film nor the lifting of the coating film was observed at all is indicated by ∘ and a specimen in which the swelling of the coating film or the lifting of the coating film was observed at least slightly is indicated by ×.

### [Table 1]

**Table 1**

| Specimen No. | Elastomer | | Silicone oil | | | Filler | | |
|---|---|---|---|---|---|---|---|---|
| | Name | Parts | Name | Kind of organic group | Parts | Name | Kind | Parts |
| Example 1 | KM2002T | 100 | POLON-MF-51 | amine | 50 | STC | silica | 50 |
| Example 2 | KM2002T | 100 | POLON-MF-51 | amine | 50 | HOMOCAL-D | calcium carbonate | 50 |
| Example 3 | KM2002T | 100 | POLON-MF-14EC | amine | 50 | STC | silica | 50 |
| Example 4 | KM2002T | 100 | POLON-MF-14EC | amine | 50 | STC | silica | 25 |
| Example 5 | KM2002T | 100 | POLON-MF-14EC | amine | 10 | - | - | - |
| Example 6 | Super Flex 470 | 100 | POLON-MF-14EC | amine | 10 | - | - | - |
| Example 7 | Super Flex 470 | 100 | POLON-MF-14EC | amine | 50 | - | - | - |
| Comparative Example 1 | KM2002T | 100 | - | - | - | - | - | - |
| Comparative Example 2 | KM2002T | 100 | POLON-MF-51 | amine | 50 | - | - | - |
| Comparative Example 3 | KM2002T | 100 | - | - | - | STC | silica | 50 |
| Comparative Example 4 | KM2002T | 100 | KF6016 | polyether | 50 | STC | silica | 50 |
| Comparative Example 5 | KM2002T | 100 | SilwetL7600 | polyether | 50 | STC | silica | 50 |
| Comparative Example 6 | KM2002T | 100 | SilwetL7602 | polyether | 50 | STC | silica | 50 |
| Comparative Example 7 | KM2002T | 100 | X-51-1264 | epoxy | 50 | STC | silica | 50 |
| Comparative Example 8 | KM2002T | 100 | KM9769 | mercapto | 50 | STC | silica | 50 |
| Comparative Example 9 | KM2002T | 100 | KM9739 | phenyl | 50 | STC | silica | 50 |
| Comparative Example 10 | KM2002T | 100 | KM862T | dimethyl | 50 | STC | silica | 50 |

### [Table 2]

**Table 2**

| Specimen No. | Film thickness | Peelability | | | | Cleanability | | Solvent resistance |
|---|---|---|---|---|---|---|---|---|
| | (µm) | Stress at breakage (N/20 mm) | Strain at breakage (%) | Peel adhesive force F_{G} (N/20 mm) | [Breaking strength F_{B} (N/20 mm)]/[peel adhesive force F_{G} (N/20 mm)] | Adhesive peel force (N/30 mm) | Adhesive peel force after immersion in hexane (N/30 mm) | Swelling/lifting |
| Example 1 | 108 | 3.41 | 213 | 1.24 | 2.74 | 0.075 | 0.395 | ∘ |
| Example 2 | 160 | 4.00 | 357 | 1.56 | 2.56 | 0.136 | 0.440 | ∘ |
| Example 3 | 105 | 4.88 | 330 | 1.96 | 2.49 | 0.142 | 0.094 | ∘ |
| Example 4 | 120 | 4.94 | 450 | 1.74 | 2.85 | 0.280 | 0.235 | ∘ |
| Example 5 | 140 | 3.82 | 456 | 1.75 | 2.19 | 0.064 | 0.096 | ∘ |
| Example 6 | 66 | 28.80 | 639 | 2.23 | 12.89 | 10.819 | 8.430 | ∘ |
| Example 7 | 165 | 13.33 | 668 | 0.92 | 14.54 | 0.294 | 3.011 | ∘ |
| Comparative Example 1 | 150 | 4.41 | 659 | 2.01 | 2.19 | 0.055 | 0.025 | × |
| Comparative Example 2 | 150 | 2.92 | 404 | unable to be peeled | - | 0.035 | 0.230 | ∘ |
| Comparative Example 3 | 105 | 7.75 | 228 | 2.71 | 2.86 | coating-film peeling | coating-film peeling | × |
| Comparative Example 4 | 122 | 1.52 | 146 | 0.23 | 6.73 | 0.357 | coating-film peeling | × |
| Comparative Example 5 | 120 | 0.63 | 29 | unable to be peeled | - | 0.301 | 2.615 | ∘ |
| Comparative Example 6 | 123 | 1.40 | 256 | 0.97 | 1.44 | 3.573 | coating-film peeling | × |
| Comparative Example 7 | 108 | 3.27 | 324 | unable to be peeled | - | 0.165 | unable to be peeled due to coating-film breakage | × |
| Comparative Example 8 | 107 | 8.01 | 421 | 2.19 | 3.67 | 0.260 | 10.934 | × |
| Comparative Example 9 | 100 | 2.70 | 111 | unable to be peeled | - | 7.450 | unable to be peeled | × |
| Comparative Example 10 | 118 | 3.17 | 146 | unable to be peeled | - | 1.087 | unable to be peeled | × |

Details of the names given in Table 1 are as follows. With respect to KF6016, SilwetL7600, and SilwetL7602, HLB (hydrophilic-lipophilic balance) values are also shown.

### <Polymers>

- KM2002T: silicone emulsion elastomer manufactured by Shin-Etsu Chemical Co., Ltd.
- Super Flex 470: urethane emulsion elastomer manufactured by Dai-ichi Kogyo Seiyaku Co., Ltd.

### <Silicone Oils>

- POLON-MF-51: amino-modified silicone oil manufactured by Shin-Etsu Chemical Co., Ltd.
- POLON-MF-14EC: amino-modified silicone oil (low viscosity) manufactured by Shin-Etsu Chemical Co., Ltd.
- KF6016: polyether-modified silicone oil (HLB value: 4.5) manufactured by Shin-Etsu Chemical Co., Ltd.
- SilwetL7600: polyether-modified silicone oil (HLB value: 14.3) manufactured by Dow Corning Toray Co., Ltd.
- SilwetL7602: polyether-modified silicone oil (HLB value: 7.3) manufactured by Dow Corning Toray Co., Ltd.
- X-51-1264: epoxy-modified silicone oil manufactured by Shin-Etsu Chemical Co., Ltd.
- KM9769: mercapto-modified silicone oil manufactured by Shin-Etsu Chemical Co., Ltd.
- KM9739: phenyl-modified silicone oil manufactured by Shin-Etsu Chemical Co., Ltd.
- KM862T: dimethyl silicone oil manufactured by Shin-Etsu Chemical Co., Ltd.

### <Fillers>

- STC: Snowtex C, manufactured by Nissan Chemical Industries, Ltd.
- HOMOCAL-D: calcium carbonate manufactured by Shiraishi Kogyo Kaisha, Ltd.

As Tables 1 and 2 show, in Examples 1 to 5, compositions each containing a silicone elastomer and an amino-modified silicone oil were used to form coating films and the values of the ratio of the breaking strength F_{B} of the film to the peel adhesive force F_{G}, F_{B}/F_{G}, were 1.5 or larger. Because of this, the coating films were excellent in terms of peelability and cleanability and gave satisfactory results regarding the solvent resistance evaluated after immersion in hexane.

In Examples 6 and 7, compositions each including a urethane elastomer and an amino-modified silicone oil were used to form coating films, and the films had higher strengths at breakage than the silicone elastomer because of the elasticity attributable to the urethane elastomer. The ratio of the breaking strength F_{B} of the film to the peel adhesive force F_{G}, F_{B}/F_{G}, was able to be 1.5 or larger without necessitating the addition of a filler. Consequently, the coating films were excellent in terms of peelability and cleanability and gave satisfactory results regarding the solvent resistance evaluated after immersion in hexane. Moreover, in Example 7, the coating film had a further reduced adhesive peel force due to the increase in the amount of the amino-modified silicone oil, giving satisfactory results regarding cleanability.

Meanwhile, in Comparative Examples 1 and 3, the coating films had reduced solvent resistance because the compositions had contained no silicone oil. In particular, the coating film of Comparative Example 3 further had reduced cleanability. In Comparative Example 2, the coating film was unable to be peeled from the SUS304 plate. In Comparative Example 4 and 6 to 10, the compositions each contained a silicone oil but the silicone oil was not an amino-modified silicone oil. Because of this, the coating films had reduced solvent resistance and swelled by the solvent. In addition, the swelling might have caused a component contained in the silicone oil or silicone elastomer to flow out of the coating films. Because of this, in cleanability test, some of the coating films peeled off or were unable to be peeled or the adhesive on some of the coating films had a considerably increased measured value of peel force and hence were difficult to peel. In Comparative Example 5, the coating film, although having satisfactory solvent resistance, had a considerably reduced stress at breakage and was unable to peel.

While preferred embodiments of the present invention have been explained above, the present invention is not limited to those embodiments and various modifications and replacements can be made in the embodiments without departing from the scope of the invention.

This application is based on a Japanese patent application filed on September 27, 2019 (Application No. 2019-177848), the contents thereof being incorporated herein by reference.

### REFERENCE SIGNS LIST

- 21: Peelable coating film
- 22: Adhesive or the like
- 31: Structural member

## Claims

1. A composition for peelable-coating-film formation comprising an elastomer and an amino-modified silicone oil, wherein
a film formed from the composition for peelable-coating-film formation has a breaking strength of F_{B} (N/20 mm) in a tensile test and a coating film formed from the composition for peelable-coating-film formation on a surface of an SUS304 plate has a peel adhesive force of F_{G} (N/20 mm) in peeling from the SUS304 plate, F_{B}/F_{G} being 1.5 or larger.

2. The composition for peelable-coating-film formation according to claim 1, which further contains a filler.

3. The composition for peelable-coating-film formation according to claim 1 or 2, wherein the elastomer is a silicone elastomer or a urethane elastomer.

4. A peelable coating film formed from the composition for peelable-coating-film formation according to any one of claims 1 to 3.
